# FASCICULE DE BREVET EUROPEEN

(11) **EP 2 716 450 B1**
(45) Date de publication et mention de la délivrance du brevet: **30.12.2015**
(21) Numéro de dépôt: 13187124.6
(22) Date de dépôt: 02.10.2013
(51) Int. Cl.: B32B 27/32, B65D 71/06, B32B 27/08

(54) **Complexe multicouche associant une couche centrale à base de polyéthylène et deux couches externes à base de polypropylène**
Mehrschichtenkomplex aus einer zentralen Schicht auf Polyethylenbasis und zwei Außenschichten auf Polypropylenbasis
Multilayer complex combining a central polyethylene layer and two outer polypropylene layers

(30) Priorité: 02.10.2012 FR 1259340
(43) Date de publication de la demande: 09.04.2014
(73) Titulaire: Ceisa Packaging, 27300 Bernay (FR)
(72) Inventeur: Mathé, Christophe, 27670 SAINT OUEN DU TILLEUL (FR)
(74) Mandataire: Cabinet Laurent & Charras

(56) Documents cités:
- EP-A1- 0 595 252
- WO-A1-00/37240
- US-A1- 2007 065 650

## Description

### DOMAINE DE L'INVENTION

L'invention a pour objet un complexe multicouche présentant successivement une couche à base de polypropylène, une couche centrale à base de polyéthylène, et une deuxième couche à base de polypropylène.

Le domaine d'utilisation de la présente invention concerne l'industrie de l'emballage et notamment les films d'emballage tertiaires éventuellement thermorétractables.

### ETAT ANTERIEUR DE LA TECHNIQUE

Dans le domaine du transport, il est courant de regrouper des articles, telle que des bouteilles par exemple, en packs au moyen d'un emballage secondaire. Ces packs peuvent être stockés et transportés sur des palettes. La manutention de ces palettes peut être facilitée lorsque les packs sont solidarisés au moyen d'un emballage de transport, autrement appelé emballage tertiaire. Il peut s'agir d'un film plastique dont les propriétés lui permettent de ne pas coller à l'emballage secondaire. En outre, il peut présenter des propriétés mécaniques spécifiques que ce soit en termes d'élasticité ou de thermo-rétractabilité. C'est notamment le cas des films anti-collants de l'art antérieur utilisés dans l'emballage tertiaire.

De manière générale, alors que les emballages secondaires sont à base de polyéthylène (PE), les emballages tertiaires sont à base de polypropylène (PP). Les films à base de PE étant incompatibles avec les films à base de PP, les emballages secondaire et tertiaire n'adhèrent pas l'un à l'autre, notamment lors d'éventuel procédés de thermoformage du film tertiaire une fois celui-ci mis en place sur le film secondaire.

Cependant, au sein même de l'emballage tertiaire, il peut être avantageux de combiner des compositions à base de PE et de PP afin d'obtenir des films présentant des propriétés mécaniques et physiques particulières. En effet, alors que le PP est rigide et transparent, le PE apporte de la souplesse et de la rétraction.

Des emballages tertiaires sous forme de films ayant une structure multicouche ont donc été développés. En pratique, lorsque l'emballage secondaire est à base de PE, il est courant d'utiliser des films tertiaires multicouches comprenant une couche interne en polyéthylène (PE) et une couche externe en polypropylène (PP).

Cependant, eu égard à l'incompatibilité des matériaux constituant ces couches, les films de l'art antérieur peuvent se délaminer très facilement.

Afin de remédier à la problématique liée à la compatibilité du PE et du PP, des compositions polymériques spécifiques ont été développées.

Par exemple, le document WO2012/024292 décrit un film multicouche associant une couche polymérique en polypropylène à une couche polymérique à base d'au moins 50 % en poids d'un polymère d'éthylène de densité inférieure ou égale à 0,935 g/cm³.

Le document WO2010/102959 décrit une composition à base de PP obtenue par catalyse hétérogène (Ziegler-Natta) et de PP obtenu par catalyse homogène (métallocène). La présence de ces deux types de PP au sein de la couche à base de PP est essentielle, le PP présentant des propriétés dépendant de son mode de préparation. Cette composition peut être utilisée pour former un complexe multicouche comprenant en outre un film à base de PE.

On connaît également le document EP 2 522 506 qui décrit un film thermo-rétractable comprenant au moins trois couches de polymères dont deux couches externes composées d'un polypropylène copolymère ou d'un mélange de polypropylène copolymère, et une couche centrale, emprisonnées entre les deux couches externes, ladite couche centrale étant composée d'un mélange de polyéthylène radicalaire et de polyéthylène linéaire. Le polyéthylène radicalaire est de préférence un polyéthylène basse densité (PEBD) et le polyéthylène linéaire peut être un homopolymère, ou, de préférence, un copolymère et, par exemple, un copolymère éthylène/hexène, un copolymère éthylène/butène ou éthylène/octène.

Le document WO 00/37240 décrit un procédé de fabrication d'un film multicouche de polyoléfine thermo-rétractable et à orientation bi-axiale comprenant une première couche formée d'un copolymère éthylène-alpha-oléfine et de deux couches extérieures positionnées de chaque côté de la couche centrale, formés d'un homo ou copolymère d'éthylène ou de propylène.

US-A 2007065650 décrit un film d'emballage tertiaire destiné à l'emballage de palettes, comprenant, dans l'ordre suivant, une couche de polyéthylène ultra basse densité, une couche intermédiaire comprenant 94-99% d'un copolymère éthylène - alpha oléfine et 0.01-6% d'un PEBD, et une couche externe à base de polypropylène.

Outre les problèmes de délamination, les films tertiaires doivent dans la pratique également permettre de faciliter les raccords entre bobines lors des opérations d'emballage, sans pour autant nécessiter l'arrêt de la chaîne de production.

Les solutions de l'art antérieur comprennent notamment l'utilisation d'une bande adhésive, et notamment d'un rouleau adhésif. Toutefois, cette solution nécessite l'arrêt des machines.

Le Demandeur a mis au point un complexe multicouche comprenant une couche interne à base de PE et deux couches externes à base de PP. Lors de son utilisation en tant qu'emballage tertiaire, eu égard aux couches externes à base de PP, ce multicouche n'adhère pas à l'emballage secondaire à base de PE.

En outre, la nature de la couche interne à base de PE permet d'assurer la cohésion avec le PP contenu dans les couches externes, et ainsi d'éviter les problèmes de délamination rencontrés lors de l'utilisation du complexe multicouche, notamment dans des applications de films d'emballage tertiaire.

Cette cohésion permet également de résoudre le problème technique concernant le raccord entre bobines de manière à assurer un procédé en continu, sans toutefois nécessiter l'utilisation d'un quelconque adhésif.

### EXPOSE DE L'INVENTION

Le Demandeur a mis au point un complexe multicouche permettant de résoudre les problèmes d'incompatibilité de l'art antérieur entre les films à base de polyéthylène (PE) et les films à base de polypropylène (PP).

Ce complexe multicouche comprend une couche centrale à base de polyéthylène (PE) dont la composition permet d'assurer la compatibilité avec les couches extérieures à base de polypropylène(PP).

Plus précisément, l'objet de la présente invention concerne un complexe multicouche comprenant successivement :
- une première couche à base de polypropylène ;
- une couche centrale à base de polyéthylène ;
- une deuxième couche à base de polypropylène,
dans lequel ladite couche centrale à base de polyéthylène comprend, en poids par rapport au poids de la couche à base de polyéthylène :
- de 50 à 70 % d'au moins un copolymère d'éthylène et d'au moins une alpha-oléfine (α-oléfine) de type CH₂=CH-CₙH₂ₙ₊₁ avec n = 2 à 10;
- de 10 à 20 % de polyéthylène haute densité (PEHD) ;
- de 20 à 30 % de polyéthylène basse densité (PEBD) ;
et dans lequel :
- la première couche à base de polypropylène représente de 5 à 40 % en poids, par rapport au poids du complexe multicouche, avantageusement de 5 à 25 % ;
- la couche centrale à base de polyéthylène représente de 20 à 90 % en poids, par rapport au poids du complexe multicouche, avantageusement de 50 à 90% ;
- la deuxième couche à base de polypropylène représente de 5 à 40 % en poids, par rapport au poids du complexe multicouche, avantageusement de 5 à 25%, afin de permettre le raccord entre bobines dudit complexe multicouche.

Par PEHD, on entend le polyéthylène haute densité présentant une densité supérieure à 0.934 g/cm³, avantageusement entre 0,945 et 0,980. Le PEHD est avantageusement préparé par catalyse homogène en présence d'un catalyseur de type métallocène.

Par PEBD, on entend le polyéthylène basse densité présentant une densité avantageusement comprise entre 0.916 et 0.934 g/cm³. Le PEBD est avantageusement préparé par catalyse homogène en présence d'un catalyseur de type métallocène.

Le complexe multicouche objet de l'invention se présente avantageusement sous la forme d'un film. En outre, il s'agit préférentiellement d'un complexe tricouche constitué des trois couches décrites ci-dessus.

Il comprend une couche centrale à base de polyéthylène qui est avantageusement dépourvue de polypropylène ou de polymère comprenant le monomère propène.

La présence du copolymère éthylène/α-oléfine dans la couche centrale permet d'assurer la cohésion avec les couches externes à base de polypropylène.

En effet, sans émettre une quelconque théorie, le Demandeur considère que le copolymère éthylène/α-oléfine permet de rendre compatible le PP et le PE des différences couches, et d'assurer une cohésion entre les différentes couches constituant le complexe multicouche.

Selon un mode de réalisation particulier, le copolymère éthylène/α-oléfine est préférentiellement un mPE, c'est-à-dire un copolymère obtenu par polymérisation de l'éthylène et d'au moins une α-oléfine en milieu homogène et en présence d'un catalyseur de type métallocène.

Dans le cadre de l'invention, ce type de copolymère mPE (éthylène/α-oléfine) est préféré au znPE obtenu par copolymérisation en milieu hétérogène en présence d'un catalyseur de type Ziegler-Natta.

En effet, comme déjà indiqué, les propriétés d'une polyoléfine peuvent varier en fonction de son mode de préparation. Ainsi, les mPE présentent généralement une distribution de poids moléculaire plus étroite que les znPE.

Comme déjà précisé, le copolymère de la couche centrale à base de PE est un copolymère d'éthylène et d'une α-oléfine de formule CH₂=CH-CₙH₂ₙ₊₁, n étant avantageusement compris entre 2 et 10, plus avantageusement entre 4 et 8. Il est avantageusement linéaire.

Selon un mode de réalisation préféré, il s'agit d'un copolymère mPE éthylène/1-hexène. Il peut notamment s'agir des copolymères Enable 2703CH et 2704 EP respectivement de chez EXXON et TOTAL.

En ce qui concerne sa composition en monomères, le copolymère éthylène/α-oléfine de la couche centrale présente avantageusement un rapport en poids éthylène/α-oléfine(s) compris entre 100/1 et 1/1, plus avantageusement encore entre 100/1 et 80/20.

En outre, la couche centrale à base de polyéthylène peut comprendre de 0 à 10 % d'au moins un additif, avantageusement de 1 à 3 %, en poids par rapport au poids de la couche centrale à base de polyéthylène.

Le ou les additifs mis en oeuvre dans le cadre de l'invention peuvent être choisis dans le groupe comprenant :
- les agents antistatiques qui permettent de dissiper les charges électrostatiques ;
- les agents antibloquant qui permettent de réduire le coefficient de friction ;
- les agents de glissement ; et
- les PPA, agents polymères aidant à la processabilité.

L'homme du métier saura choisir le ou les additifs adéquats. De manière non limitative, il peut notamment s'agir d'amines éthoxylées dans le cas des agents antistatiques, et dans le cas des agents antibloquant de la silice, du talc, ou des microbilles de verre.

De manière avantageuse, le complexe multicouche selon l'invention peut comprendre, en poids par rapport au poids du complexe multicouche :
- une première couche à base de polypropylène représentant de 5 à 40 %, avantageusement de 5 à 25 %, plus avantageusement encore de 5 à 15% ;
- une couche centrale à base de polyéthylène représentant de 20 à 90 %, avantageusement de 50 à 90 % ;
- une deuxième couche à base de polypropylène représentant de 5 à 40 %, avantageusement de 5 à 25 %, plus avantageusement encore de 5 à 15%.

Selon un autre mode de réalisation particulier de l'invention, la première et la deuxième couches à base de polypropylène sont identiques. Elles peuvent notamment comprendre, en poids par rapport au poids de la couche à base de polypropylène :
- de 50 à 100 % de polypropylène, avantageusement au moins 90 %, et plus avantageusement de 90 à 97 ou de 90 à 98 % ;
- de 0 à 10 % d'au moins un additif tel que ceux cités ci-avant, avantageusement de 1 à 3 %.

La couche à base de PP peut être uniquement constituée de PP et d'au moins un additif dans les proportions indiquées ci-dessus. Toutefois, selon un mode de réalisation particulier, elle peut également comprendre du PE linéaire et/ou du mPE.

En outre, de manière générale, le complexe multicouche objet de l'invention présente une épaisseur avantageusement comprise entre 35 et 70 micromètres.

Selon un mode de réalisation particulier, le complexe multicouche présente une épaisseur comprise entre 35 et 70 micromètres, et est constitué successivement de :
- 10 % en poids d'une première couche à base de polypropylène ;
- 80% en poids d'une couche centrale à base de polyéthylène, comprenant avantageusement un copolymère éthylène/hexène, du PEBD et du PEHD ;
- 10 % en poids d'une deuxième couche à base de polypropylène.

La présente invention concerne également le procédé de préparation du complexe multicouche décrit ci-avant. Il peut être mis en oeuvre par coextrusion des trois couches au moyen d'une machine d'extrusion-soufflage.

Dans ce procédé, le complexe multicouche, et plus particulièrement chacune des trois couches, est extrudé dans une filière annulaire.

Le complexe multicouche, se présentant sous la forme d'un film tubulaire, est ainsi soumis à un procédé de soufflage, qui le gonfle pour former une bulle. Cette bulle est par la suite remise à plat et enroulée.

Lors de l'utilisation du film notamment en tant qu'emballage tertiaire, la cohésion entre les couches constituant le complexe multicouche, permet de faciliter le raccord entre bobines, et ainsi de l'effectuer sans pour autant arrêter la chaîne de production.

La nature du complexe multicouche permet ainsi un gain de temps considérable sur les lignes de production, les temps d'arrêts dus au raccord des bobines sont ainsi supprimés et facilitent ainsi la mise en oeuvre en haute cadence des lignes de fardelage. Le fardelage concerne l'opération consistant à fixer des marchandises, notamment au moyen d'un emballage tertiaire afin de faciliter leur transport et leur manutention.

Ainsi, le complexe multicouche de l'invention se distingue des films de l'art antérieur en ce que ses propriétés permettent le raccord entre bobines sans adhésif.

Comme déjà indiqué, le complexe multicouche objet de l'invention est avantageusement utilisé en tant que film d'emballage tertiaire anti-collant notamment pour le regroupement de produits pré-emballés au moyen d'un film d'emballage secondaire généralement à base de PE thermorétractable.

S'agissant des propriétés du film objet de l'invention, il est avantageusement thermorétractable, et peut être utilisé sur les machines équipées de système de raccord automatique.

L'invention a également pour objet un film d'emballage tertiaire comprenant le complexe multicouche décrit ci-avant.

L'invention et les avantages qui en découlent ressortiront mieux des exemples suivants donnés afin d'illustrer l'invention et non de manière limitative.

### EXEMPLES DE REALISATION DE L'INVENTION

Un film PP/PE/PP thermorétractable, selon l'invention, a été préparé par co-extrusion des trois compositions détaillées dans le tableau 1.

Ce film présente une épaisseur de 50 micromètres. Il comprend, en poids par rapport au poids du film :
- 10 % en poids de la couche externe PP1 ;
- 80 % en poids de la couche centrale PE ;
- 10 % en poids de la couche externe PP2.

Les couches externes PP1 et PP2 sont à base de polypropylène alors que la couche centrale PE est à base de polyéthylène.

**Tableau 1 : Composition des couches constitutives du complexe multicouche**

| | **Couche externe PP1** | **Couche centrale PE** | **Couche externe PP2** |
|---|---|---|---|
| **PP⁽¹⁾** | 98% | 0% | 98% |
| **mPE⁽²⁾** | 0% | 69% | 0% |
| **PEHD⁽³⁾** | 0% | 10% | 0% |
| **PEBD⁽⁴⁾** | 0% | 20% | 0% |
| **Additifs⁽⁵⁾** | 2% | 1% | 2% |

| | | | |
|---|---|---|---|
| ⁽¹⁾ polypropylène (ADSYL 5C37F de Lyondellbasell) de densité d=0.900 et d'indice de fluidité MFI=230 °C/2.16 kg ⁽²⁾ copolymère éthylène/1-hexène de densité d=0.927 et d'indice de fluidité MFI=190 °C/2.16 kg (Enable 2703CH de EXXON ou 2704 EP de TOTAL) ⁽³⁾ polyéthylène haute densité de densité d=0.961 et d'indice de fluidité MFI=190 °C/2.16 kg ⁽⁴⁾ polyéthylène radicalaire de densité d=0.924 et d'indice de fluidité MFI=190 °C/2.16 kg ⁽⁵⁾ additifs= agent antibloquant et combinaison d'agents antibloquant et antistatique | | | |

Les pourcentages sont exprimés en poids, par rapport au poids de la couche concernée.

La densité des polymères est mesurée selon la norme ISO 1183. L'indice de fluidité (MFI) est mesuré selon la norme ISO 1133.

La rigidité du film est évaluée à l'aide de la contrainte à la force d'écoulement, mesurée selon la norme ISO 527/3. Elle est égale à 16 N/mm² pour le film ayant la formulation ci-dessus, dans le sens machine et travers.

## Revendications

1. Complexe multicouche comprenant successivement :
- une première couche à base de polypropylène ;
- une couche centrale à base de polyéthylène ;
- une deuxième couche à base de polypropylène ;
***caractérisé* en ce que** ladite couche centrale à base de polyéthylène comprend, en poids par rapport au poids de la couche à base de polyéthylène :
- de 50 à 70 % d'au moins un copolymère d'éthylène et d'au moins une alpha-oléfine de type CH₂=CH-CₙH₂ₙ₊₁ avec n = 2 à 10, - de 10 à 20 % de PEHD, - de 20 à 30 % de PEBD,
***et en ce que***
- la première couche à base de polypropylène représente de 5 à 40 % en poids, par rapport au poids du complexe multicouche, avantageusement de 5 à 25 % ;
- la couche centrale à base de polyéthylène représente de 20 à 90 % en poids, par rapport au poids du complexe multicouche, avantageusement de 50 à 90% ;
- la deuxième couche à base de polypropylène représente de 5 à 40 % en poids, par rapport au poids du complexe multicouche, avantageusement de 5 à 25%,
afin de permettre le raccord entre bobines dudit complexe multicouche.

2. Complexe multicouche selon la revendication 1, ***caractérisé* en ce que** la première et la deuxième couches à base de polypropylène sont identiques.

3. Complexe multicouche selon l'une des revendications 1 ou 2, ***caractérisé* en ce que** la première et/ou la deuxième couche à base de polypropylène comprend, en poids par rapport au poids de la couche à base de polypropylène :
- de 50 à 100 % de polypropylène, avantageusement de 90 à 98 % ;
- de 0 à 10 % d'au moins un additif, avantageusement de 1 à 3 %.

4. Complexe multicouche selon l'une des revendications 1 à3, ***caractérisé* en ce que** le copolymère éthylène/α-oléfine de la couche centrale présente un rapport en poids éthylène/α-oléfine(s) compris entre 100/1 et 1/1, plus avantageusement encore entre 100/1 et 80/20.

5. Complexe multicouche selon l'une des revendications 1 à4, ***caractérisé* en ce que** la couche centrale à base de polyéthylène comprend en outre de 0 à 10 % d'au moins un additif, avantageusement de 1 à 3 %, en poids par rapport au poids de la couche à base de polyéthylène.

6. Complexe multicouche selon l'une des revendications 1 à5, ***caractérisé* en ce que** le copolymère d'éthylène est un copolymère d'éthylène et d'hexène.

7. Complexe multicouche selon l'une des revendications 1 à6, ***caractérisé* en ce qu'**il est constitué successivement, en poids par rapport au poids du complexe multicouche, de :
- 10 % d'une première couche à base de polypropylène ;
- 80% d'une couche centrale à base de polyéthylène ;
- 10 % d'une deuxième couche à base de polypropylène ;
l'épaisseur du complexe multicouche étant comprise entre 35 et 70 micromètres.

8. Procédé de préparation du complexe multicouche objet de l'une des revendications 1 à7, par extrusion soufflage.

9. Film d'emballage tertiaire comprenant le complexe multicouche objet de l'une des revendications 1 à7.

## Patentansprüche

1. Multischichtkomplex, umfassend sukzessive:
- eine erste Schicht auf Polypropylenbasis;
- eine zentrale Schicht auf Polyethylenbasis;
- eine zweite Schicht auf Polypropylenbasis;
**dadurch gekennzeichnet, dass** die genannte zentrale Schicht auf Polyethylenbasis an Gewicht im Verhältnis zur Schicht auf Polyethylenbasis:
- wenigstens zwischen 50 und 70 % eines Ethylen-Kopolymers und wenigstens ein Alpha-Olefin vom Typ CH₂ = CH-CₙH₂ₙ₊₁ umfasst, wobei n = 2 bis 10, - 10 bis 20 % PEHD, - 20 bis 3 % PEBD ist,
und dass
- die erste Schicht auf Polypropylenbasis zwischen 5 und 40 Gew.-%, im Verhältnis zum Gewicht des Mehrschichtkomplexes, vorteilhaft 5 bis 25 % darstellt;
- die zentrale Schicht auf Polyethylenbasis zwischen 20 und 90 Gew.-% im Verhältnis zum Gewicht des Mehrschichtkomplexes, vorteilhaft 50 bis 90 % darstellt;
- die zweite Schicht auf Polypropylenbasis 5 bis 40 Gew.-% im Verhältnis zum Mehrschichtkomplex, vorteilhaft 5 bis 25 % darstellt,
um den Anschluss zwischen den Spulen des genannten Mehrschichtkomplexes zu ermöglichen.

2. Mehrschichtkomplex gemäß Anspruch 1, **dadurch gekennzeichnet, dass** die erste und die zweite Schicht auf Polypropylenbasis identisch sind.

3. Mehrschichtkomplex gemäß Anspruch 1 oder 2, **dadurch gekennzeichnet, dass** die erste und / oder die zweite Schicht auf Polypropylenbasis an Gewicht im Verhältnis zum Gewicht der Polypropylenschicht:
- zwischen 50 und 100 % Polypropylen, vorteilhaft zwischen 90 und 98 %;
- zwischen 0 und 10 % wenigstens eines Zusatzstoffes, vorteilhaft zwischen 1 und 3%
umfasst.

4. Mehrschichtkomplex gemäß einem der Ansprüche 1 bis 3, **dadurch gekennzeichnet, dass** das Kopolymer Ethylen / α-Olefin der zentralen Schicht ein Gewichtsverhältnis Ethylen / α-Olefin(e) aufweist, das zwischen 100/1 und 1/1, weiter bevorzugt zwischen 100/1 und 80/20 inbegriffen ist.

5. Mehrschichtkomplex gemäß einem der Ansprüche 1 bis 4, **dadurch gekennzeichnet, dass** die zentrale Schicht auf Polyethylenbasis darüber hinaus wenigstens 0 bis 10 % eines Zusatzstoffs, vorteilhaft 1 bis 3 Gew.-% im Verhältnis zum Gewicht der Schicht auf Polyethylenbasis umfasst.

6. Mehrschichtkomplex gemäß einem der Ansprüche 1 bis 5, **dadurch gekennzeichnet, dass** das Ethylen-Kopolymer ein Ethylen- und Hexen-Kopolymer ist.

7. Mehrschichtkomplex gemäß einem der Ansprüche 1 bis 6, **dadurch gekennzeichnet, dass** es sukzessive an Gewicht im Verhältnis zum Mehrschichtkomplex
- 10 % einer ersten Schicht auf Polypropylenbasis;
- 80 % einer zentralen Schicht auf Polyethylenbasis;
- 10 % einer zweiten Schicht auf Polypropylenbasis
Umfasst,
wobei die Dicke des Mehrschichtkomplexes zwischen 35 und 70 Mikrometer inbegriffen ist.

8. Zubereitungsverfahren des Mehrschichtkomplexes, der Gegenstand von einem der Ansprüche 1 bis 7 ist, per Gebläse-Extrudieren.

9. Tertiäre Verpackungsfolie, umfassend den Mehrschichtkomplex, der Gegenstand von einem der Ansprüche 1 bis 7 ist.

## Claims

1. A multicolored complex comprising in succession:
- a first coat based on polypropylene;
- a central coat based on polyethylene,
- a second coat based on polypropylene;
**characterized in that** this central coat based on polyethylene includes, by weight with respect to the weight of the polyethylene base coat:
- between 50 and 70% of at least one ethylene copolymer and of at least one alpha-olefin of the CH₂=CH-CₙH₂ₙ+₁ type where n = 2 to 10, - between 10 to 20% of PEHD, - between 20 to 30% of PEBD,
and **in that**
- the first polypropylene base coat represents between 5 and 40% by weight, with respect to the multicoat complex, advantageously of between 5 and 25%;
- the central polyethylene base coat represents between 20 and 90% by weight, with respect to the multicoat complex weight, advantageously between 50 and 90%;
- the second polypropylene base coat represents between 5 and 40% by weight, with respect to the weight of the multicoat complex, advantageously between 5 and 25%,
in order to allow connection between the threads of this multicolored complex.

2. A multicoat complex according to claim 1, **characterized in that** the first and second coats based on polypropylene are identical.

3. A multicoat complex according to one of the claims 1 or 2 **characterized in that** the first and/or second coat based on polypropylene includes, by weight with respect to the weight of the polypropylene base coat:
- between 50 and 100% polypropylene, advantageously between 90 and 98%;
- between 0 and 10% of at least one additive, advantageously between 1 and 3%

4. A multicoat complex according to one of the claims 1 to 3 **characterized in that** the copolymer ethylene / α-olefin of the central coat has an ethylene / α-olefin(s) weight ratio between 100/1 and 1/1, even more advantageously between 100/1 and 80/20.

5. A multicoat complex according to one of the claims 1 to 4 **characterized in that** the central coat based on polyethylene includes in addition between 0 to 10% of at least one additive, advantageously between 1 and 3%, by weight with respect to the weight of the polyethylene base coat.

6. A multicoat complex according to one of the claims 1 to 5 **characterized in that** the ethylene copolymer is a copolymer of ethylene and hexane.

7. A multicoat complex according to one of the claims 1 to 6, **characterized in that** it comprises successively, by weight with respect to the weight of the multicoat complex:
- 10% of a first coat based on polypropylene;
- 80% of a central coat based on polyethylene;
- 10% of a second coat based on polypropylene;
the thickness of the multicoated complex being between 35 and 70 µm.

8. A process for the preparation of the multicoat complex forming the subject of one of the claims 1 to 7, by extrusion-blowing.

9. A tertiary packing film comprising the multicoat complex forming the subject of one of the claims 1 to 7.
